Europäisches Patentamt

European Patent Office

Office européen des brevets

(19)

(11) Numéro de publication : **0 013 232**
**B1**

(12) FASCICULE DE BREVET EUROPÉEN

(45) Date de publication du fascicule du brevet :
26.01.83

(51) Int. Cl.³ : **H 02 P  7/00, B 60 K 31/00,**
**G 05 D 13/62**

(21) Numéro de dépôt : 79401054.6

(22) Date de dépôt : 20.12.79

(54) **Dispositif de régulation de la vitesse d'un élément entraîné par un moteur, notamment dispositif de régulation de la vitesse d'un véhicule automobile.**

(30) Priorité : 21.12.78 FR 7835994

(43) Date de publication de la demande :
09.07.80 Bulletin 80/14

(45) Mention de la délivrance du brevet :
26.01.83 Bulletin 83/04

(84) Etats contractants désignés :
DE GB IT

(56) Documents cités :
DE B 1 131 312
FR A 2 029 582
FR A 2 343 622
FR A 2 343 623
FR A 2 382 795
US A 3 575 256

(73) Titulaire : **SOCIETE ANONYME AUTOMOBILES**
**CITROEN**
117 à 167, Quai André Citroen
F-75747 Paris Cedex 15 (FR)

**AUTOMOBILES PEUGEOT**
75, avenue de la Grande Armée
F-75116 Paris (FR)

(72) Inventeur : **Horblin, Michel Yves**
3, Place Hérold
F-92400 Courbevoie (FR)
Inventeur : **Menager, René Roger**
14, rue du Petit Bontemps
F-78370 Plaisir (FR)

(74) Mandataire : **Michardière, Bernard et al**
Cabinet Plasseraud 84, rue d'Amsterdam
F-75009 Paris (FR)

Jouve, 18, rue St-Denis, 75001 Paris, France

## Dispositif de régulation de la vitesse d'un élément entraîné par un moteur, notamment dispositif de régulation de la vitesse d'un véhicule automobile

L'invention est relative à un dispositif de régulation de la vitesse d'un élément entraîné par un moteur, dispositif du genre de ceux qui comprennent :

— un capteur de la vitesse dudit élément propre à fournir des signaux dont la fréquence dépend de la vitesse de cet élément ;

— un convertisseur fréquence-tension propre à faire correspondre à la fréquence des signaux, fournis par le capteur, une tension dépendant de ladite fréquence et comprenant une composante moyenne continue et une composante alternative ;

— des moyens de comparaison de cette tension avec une tension de référence correspondant à une consigne de vitesse prédéterminée, ces moyens de comparaison étant propres à fournir, à leur sortie, un signal dépendant du résultat de la comparaison ;

— et des moyens d'entraînement, sensibles au signal de sortie des moyens de comparaison, propres à agir sur un organe de réglage de l'allure du moteur de manière à modifier cette allure dans le sens qui tend à ramener la vitesse de l'élément à la valeur souhaitée.

L'invention concerne, plus particulièrement, mais non exclusivement, un dispositif de régulation de la vitesse d'un véhicule automobile, l'élément entraîné étant alors constitué par une roue du véhicule ou par un arbre d'entraînement de roue.

Le document FR-A-2 343 623 montre un dispositif de régulation de ce genre. Toutefois, le convertisseur fréquence-tension est essentiellement agencé pour fournir une tension continue et donc pour réduire au minimum la composante alternative dont aucune utilisation n'est prévue. Le fait de lisser le mieux possible, la tension dépendant de la vitesse peut conduire à un retard dans la réponse du dispositif de régulation lors de fluctuations de la vitesse.

Le document FR-A-2 382 795 est relatif à un circuit de commande d'un moteur électrique comprenant deux comparateurs associés, en quelque sorte, à une sur-vitesse et à une sous-vitesse, en combinaison avec un signal de tension comprenant une composante continue et une composante alternative. Les seuils de basculement de ces comparateurs sont décalés de part et d'autre de la valeur de la tension continue, de la même valeur absolue, la différence entre les deux seuils étant sensiblement égale à l'amplitude de la composante alternative. Bien que l'application de ce dispositif à une installation de régulation de vitesse de véhicule automobile, par réglage du clapet d'étranglement, soit explicitement prévue à la page 1, lignes 28 à 31, aucune précision n'est donnée sur la source de tension continue et la source de tension alternative. En outre, la commande du moteur électrique, formant les moyens d'entraînement sensibles au signal de sortie des moyens de comparaison, est symétrique, c'est-à-dire que la réaction du dispositif est aussi énergique en cas de sur-vitesse qu'en cas de sous-vitesse.

L'invention a pour but, surtout, de rendre les dispositifs de régulation, du genre en question, tels qu'ils permettent d'obtenir, non seulement une réponse améliorée en cas de fluctuations de la vitesse, mais aussi une réponse asymétrique, c'est-à-dire une réponse plus énergique pour un sens de variation de la vitesse. Une telle réponse asymétrique est particulièrement intéressante dans le cas où les moyens d'entraînement doivent agir sur un organe de réglage rappelé par des moyens élastiques ; il est, en effet, souhaitable que la réponse du dispositif de régulation soit plus énergique lorsque les moyens d'entraînement doivent déplacer l'organe de réglage dans le sens qui nécessite de vaincre l'effort de rappel.

Selon l'invention, un dispositif de régulation de la vitesse d'un élément entraîné par un moteur, du genre défini précédemment, est caractérisé par le fait :

— que le convertisseur fréquence-tension est agencé pour fournir une tension dont la composante alternative a la forme d'une dent de scie qui présente une partie incurvée ;

— et que, d'une manière connue elle-même, les moyens de comparaison comprennent deux comparateurs associés, respectivement, à une sur-vitesse et à une sous-vitesse de l'élément, les seuils de basculement de ces comparateurs étant décalés, de part et d'autre de la tension correspondant à la consigne prédéterminée, de la même ou sensiblement la même valeur absolue ; la différence entre les deux seuils étant sensiblement égale à l'amplitude de la composante alternative résiduelle, l'ensemble étant tel qu'on obtienne une commande de l'organe de réglage du moteur plus énergique dans un sens que dans l'autre.

Dans le cas d'un dispositif de régulation pour véhicule automobile, dont l'organe de réglage de l'allure du moteur est rappelé par des moyens élastiques dans la position de fermeture, correspondant à la plus petite vitesse du moteur, la partie incurvée de la dent de scie de la composante alternative est formée par la partie descendante de cette dent de scie, cette partie incurvée tournant sa concavité dans un sens tel que la commande de l'organe de réglage soit plus énergique en cas de sous-vitesse.

La solution de l'invention présente non seulement l'avantage de ne pas avoir à lisser par intégration la tension représentant la vitesse, ce qui conduit à une réponse améliorée, mais aussi celui d'une réponse asymétrique permettant de compenser les effets d'un rappel élastique.

De préférence, l'amplitude du décalage des seuils des comparateurs est constante quelle que soit la vitesse de l'élément, et le convertisseur fréquence-tension est agencé pour fournir une composante alternative dont l'amplitude reste '

constante quelle que soit la vitesse dudit élément, la fréquence de cette composante alternative continuant à dépendre de ladite vitesse.

Avantageusement, l'amplitude du décalage des seuils des comparateurs correspond, sensiblement, à 5 % de la vitesse maximale possible pour ledit élément.

Dans le cas où le dispositif de régulation est utilisé sur un véhicule automobile, l'amplitude du décalage des seuils correspond sensiblement à une vitesse de l'ordre de 5 km/heure de part et d'autre de la valeur moyenne de la vitesse.

Les moyens d'entraînement propres à agir sur l'organe de réglage de l'allure du moteur peuvent comprendre un moteur électrique ; le circuit de commande de ce moteur électrique comprend, de préférence, des contacts fin de course inverseurs propres à couper l'alimentation du moteur électrique en fin de course de l'organe de réglage, et agencés de telle sorte qu'ils assurent, lorsqu'ils sont actionnés, le branchement des deux bornes du moteur électrique à un même pôle, notamment positif, de manière à provoquer un arrêt pratiquement instantané de ce moteur.

L'invention consiste, mises à part les dispositions exposées ci-dessus, en certaines autres dispositions dont il sera plus explicitement question ci-après, à propos d'un mode de réalisation particulier décrit avec référence aux dessins ci-annexés, mais qui n'est nullement limitatif.

La figure 1 de ces dessins, est un schéma d'un dispositif de régulation conforme à l'invention.

La figure 2 est un diagramme représentant la composante alternative de tension, en fonction du temps dans le cas où la vitesse moyenne réelle est égale à la vitesse souhaitée.

La figure 3 illustre les signaux électriques, intervenant dans le dispositif de régulation, dans le cas d'une sur-vitesse.

La figure 4 illustre, d'une manière semblable, le cas d'une sous-vitesse.

La figure 5 enfin, est un diagramme illustrant l'amplitude du signal de commande, tendant à rétablir la vitesse souhaitée, en fonction des variations de la vitesse réelle.

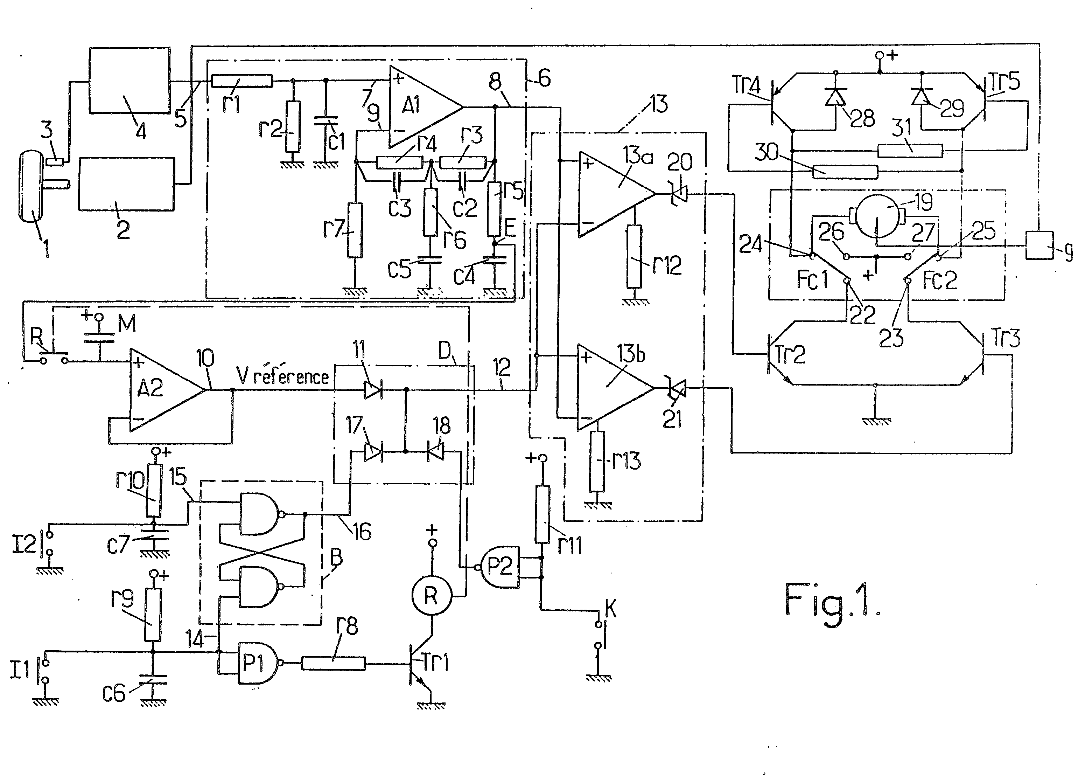

En se reportant à la figure 1, on peut voir un dispositif de régulation de la vitesse d'un élément 1 entraîné par un moteur 2.

Dans un but de simplification, la description concernera l'application d'un tel dispositif à la régulation de la vitesse d'un véhicule automobile entraîné par un moteur 2 à combustion interne, l'élément 1 étant constitué par exemple, par une roue du véhicule.

Il est clair, cependant, que l'invention peut être utilisée pour d'autres applications de régulation de vitesse.

Le dispositif comprend un capteur de vitesse 3, par exemple un capteur magnétique ou une dynamo tachymétrique, propre à fournir des signaux dont la fréquence dépend de la vitesse de rotation de l'élément 1.

Le capteur 3 est branché sur l'entrée d'un circuit 4 de mise en forme des signaux.

La sortie du circuit 4 envoie l'information, sous forme d'impulsions, à l'entrée 5 d'un convertisseur fréquence-tension 6.

Ce convertisseur est réalisé autour d'un amplificateur opérationnel A1. L'entrée 5 du convertisseur est reliée par une résistance r1 à l'entrée non inverseuse 7 de l'amplificateur A1. Cette entrée 7 est, en outre, reliée à la masse par une résistance r2 et un condensateur c1 disposés en parallèle.

La sortie 8 de l'amplificateur A1 est reliée à l'entrée inverseuse 9 par deux résistances r3, r4, disposées en série. Aux bornes des résistances r3 et r4 sont branchés, en parallèle, des condensateurs c2 et c3, dont les capacités sont égales.

La sortie 8 est, en outre, reliée à la masse par une résistance r5 et un condensateur c4 disposés en série.

Le point intermédiaire entre les résistances r3 et r4 est également relié à la masse par une résistance r6 et un condensateur c5 disposés en série.

L'entrée 9 est reliée à la masse par une résistance r7.

L'amplificateur A1 est agencé de manière que sa tension de sortie V, et donc la tension de sortie du convertisseur 6, soit égale à la somme d'une tension $v$ proportionnelle à la vitesse de l'élément 1 et d'une tension $K \cdot dv/dt$ proportionnelle à l'accélération de cet élément : $V = v + k \, dv/dt$.

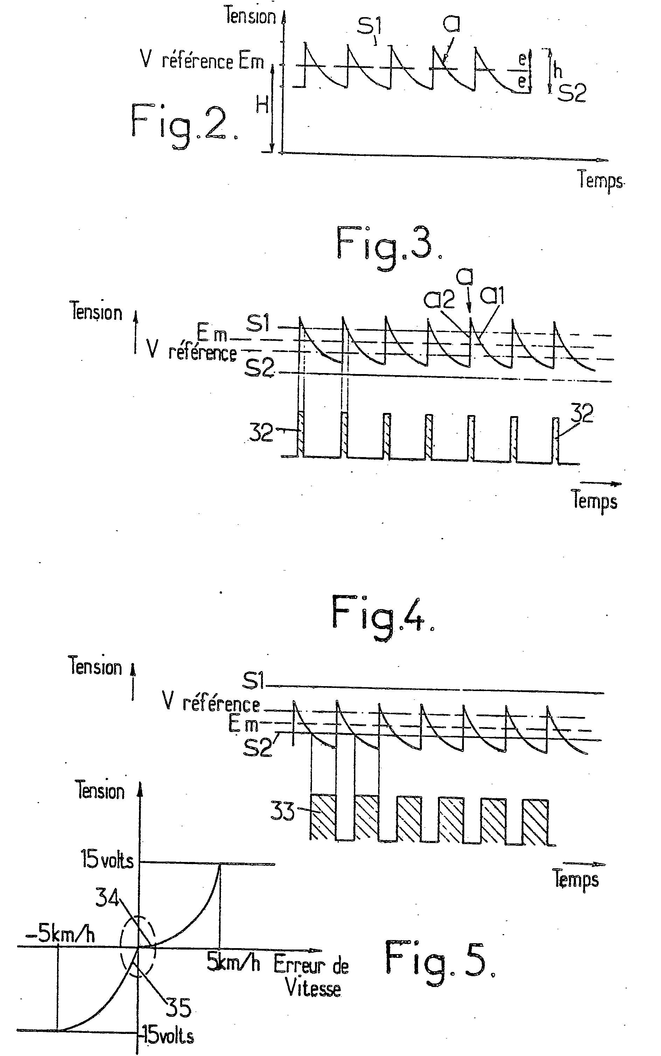

La tension V comprend une composante moyenne continue Em et une composante alternative $a$, comme montré sur la figure 2.

L'amplitude de la composante alternative $a$ (figure 2) peut être modifiée en faisant varier la valeur des résistances r1, r2 et la valeur de la capacité c1.

La résistance r5 et le condensateur c4 forment un circuit d'intégration dont le point milieu E est à la tension $v$ qui représente la vitesse seule de l'élément 1.

Ce point E est relié par l'intermédiaire d'un contact travail d'un relais R, à une borne d'un condensateur M de mémoire. L'autre borne de ce condensateur M est reliée au pôle + d'une source de tension continue.

Par fermeture du contact travail R on peut donc mémoriser dans le condensateur M la tension du point E, cette tension mémorisée devenant la tension de référence correspondant à une vitesse de référence, c'est-à-dire à une consigne ou limite de vitesse prédéterminée.

La borne du condensateur M branchée sur le contact travail du relais R est reliée à l'entrée non inverseuse d'un amplificateur opérationnel A2 qui possède une très grande impédance d'entrée de manière que la tension mise en mémoire dans le condensateur M se conserve longtemps. Cet amplificateur opérationnel A2 est monté en suiveur de tension, sa sortie 10 étant reliée à son entrée inverseuse.

La tension de référence V référence est donc disponible sur cette sortie 10, laquelle est reliée, par l'intermédiaire d'une diode 11 à une entrée 12 de moyens de comparaison 13.

L'enroulement du relais R est branché entre le pôle + et le collecteur d'un transistor Tr1 du type npn, dont l'émetteur est relié à la masse. La base de ce transistor est reliée, par une résistance r8 à la sortie d'une porte « NON ET » P1, à deux entrées court-circuitées.

Les entrées de la porte P1 sont reliées à une borne d'un contact I1, ouvert en position repos ; l'autre borne de ce contact I1 est relié à la masse.

La porte P1 est temporisée par un condensateur c6 branché entre ses entrées et la masse et par une résistance r9 branchée entre le pôle + et les entrées de la porte P1.

Ces entrées de la porte P1 sont elles-mêmes reliées à une entrée 14 d'une bascule B du type RS. Une autre entrée 15 de cette bascule B est reliée à la borne d'un contact 12 ouvert en position repos ; l'autre borne de ce contact 12 est reliée à la masse.

Une temporisation de cette entrée 15 est réalisée par un condensateur c7 branché entre l'entrée 15 et la masse et par une résistance r10 branchée entre le pôle + et l'entrée 15.

La constante de temps de la temporisation de cette entrée 15 de la porte B est supérieure à la constante de temps de la temporisation de l'entrée 14 de la porte B reliée aux entrées de la porte P1, c'est-à-dire que le produit des valeurs de la résistance r10 et du condensateur c7 est supérieur au produit des valeurs de la résistance r9 et du condensateur c6 :

$$r10 \cdot c7 > r9 \cdot c6.$$

La sortie 16 de la bascule B est reliée à l'anode d'une diode 17 dont la cathode est reliée à la cathode de la diode 11.

Lorsque la sortie 16 de la bascule B est à l'état « haut » (sensiblement la tension du pôle +, par exemple 15 volts), une impulsion sur l'entrée 14, par fermeture du contact I1 et mise à la masse de cette entrée 14, provoque le passage de la sortie 16 à l'état « bas » (tension sensiblement nulle).

Une impulsion sur l'entrée 15, alors que la sortie 16 se trouve à l'état « haut » ne modifie pas l'état de cette sortie 16.

Si la sortie 16 se trouve à l'état « bas », une impulsion sur l'entrée 15, par fermeture du contact 12 et mise à la masse de cette entrée, provoque le passage de cette sortie 16 à l'état « haut ».

Lorsque la sortie 16 est à l'état « bas », une impulsion sur l'entrée 14 ne modifie pas l'état de la sortie 16.

On peut prévoir, en outre, un contact K, ouvert en position repos et propre à être actionné lorsque la pédale d'accélérateur du véhicule est enfoncée complètement, afin de supprimer l'action du dispositif de régulation.

Une borne de ce contact K est reliée à la masse tandis que l'autre borne est reliée aux entrées court-circuitées d'une porte « NON ET » P2. Les entrées de cette porte sont, en outre, reliées par l'intermédiaire d'une résistance r11 au pôle +.

La sortie de la porte P2 est reliée à l'anode d'une diode 18 dont la cathode est reliée à celles des diodes 11 et 17.

Les diodes 11, 17 et 18 forment un pont D qui laisse apparaître sur les cathodes branchées en commun, et donc sur l'entrée 12 des moyens comparateurs 13, la plus forte tension présente sur l'une des trois anodes des diodes 11, 17 et 18.

La mise en mémoire d'une tension de référence dans le condensateur M est obtenue, par le conducteur du véhicule, en fermant l'interrupteur I1 par une impulsion ; la sortie de la porte inverseuse P1 est portée à un potentiel positif, ce qui rend conducteur le transistor Tr1 et fait coller le relais R dont le contact travail permet la charge du condensateur M. La temporisation de la porte P1 est suffisante pour assurer le temps de charge nécessaire à la mémoire M, même si la fermeture du contact I1 est très fugitive.

La fermeture de ce contact I1 envoie une impulsion sur l'entrée 14 de la bascule B de telle sorte que la sortie 16 de cette bascule va passer à l'état « bas », si elle se trouvait à l'état « haut », ou va rester à l'état « bas » si elle s'y trouvait déjà.

De ce fait, la tension qui va apparaître sur l'entrée des moyens de comparaison 13 sera la tension « V référence » présente sur l'anode de la diode 11. La tension V référence est donc « validée » et va correspondre à la consigne de vitesse prédéterminée.

Pour invalider la tension « V référence » et mettre ainsi hors d'action la limitation à la vitesse de consigne « V référence », le conducteur peut agir sur le contact 12 de manière à le fermer. Une impulsion, envoyée sur l'entrée 15 de la bascule B par cette fermeture, fait passer, ou maintient, la sortie 16 de cette bascule B à l'état « haut ». La tension correspondant à l'état « haut » sur la sortie 16 est supérieure au maximum possible pour la tension « V référence ».

L'entrée 12 des moyens comparateurs 13 est portée à la tension présente sur la sortie 16.

Cette tension correspond, en quelque sorte, à une consigne prédéterminée de vitesse supérieure à la vitesse maximale possible pour le véhicule. La fermeture du contact 12 revient donc à supprimer toute limitation introduite par la régulation puisque cette dernière tend à faire fonctionner le véhicule à sa vitesse maximale.

Du fait que la temporisation de l'entrée 15 a une constante de temps supérieure à la temporisation de l'entrée 14 de la bascule B, lors de la mise sous tension du dispositif de régulation, l'entrée 15 de la bascule B va monter en tension moins rapidement que l'entrée 14 de la bascule B, ce qui est équivalent, en quelque sorte, à une impulsion négative sur l'entrée 15. Ainsi, lors de la mise sous tension du dispositif de régulation (mise sous tension obtenue lorsque le conducteur tourne la clef de contact du véhicule pour mettre le contact général), la sortie 16 de la bascule B se positionne à l'état « haut », de telle sorte que le dispositif de régulation de vitesse ne provoquera pas une limitation de la vitesse à une valeur inférieure à la vitesse maximale, avant que le conducteur n'ait agi sur le contact I1 pour

mémoriser une vitesse.

Le conducteur peut, aussi, supprimer la limitation à la vitesse de consigne en fermant le contact K par enfoncement de la pédale d'accélérateur au-delà d'une butée formant point dur ; la sortie de la porte P2 passe à l'état « haut » et cette tension prédomine dans le pont de diodes D et apparaît sur l'entrée 12 des moyens de comparaison. Dès que le contact K est relâché, la consigne correspondant à la tension V référence est de nouveau validée.

Les moyens de comparaison 13 comprennent deux comparateurs 13a, 13b. Le comparateur 13a est associé à une sur-vitesse, c'est-à-dire qu'il produit, à sa sortie, un signal de commande, lorsque la vitesse réelle de l'élément 1 est supérieure à la consigne prédéterminée correspondant à V référence. Le comparateur 13b est associé à une sous-vitesse (cas inverse du précédent) de l'élément 1.

Comme visible sur la figure 1, l'entrée non inverseuse du comparateur 13a est reliée à l'entrée inverseuse du comparateur 13b, ces deux entrées étant reliée à la sortie 8 du convertisseur fréquence-tension 6.

L'entrée inverseuse du comparateur 13a est reliée à l'entrée non-inverseuse du comparateur 13b, ces deux entrées étant reliées à l'entrée 12, elle-même reliées aux cathodes des diodes 11, 17, 18.

Le seuil de basculement S1 (figure 2) du comparateur 13a est décalé d'une valeur e par rapport à la tension « V référence » correspondant à la consigne prédéterminée.

Dans l'exemple de dispositif de régulation décrit, la tension « V référence » augmente avec la vitesse de l'élément 1. Le seuil S1, du comparateur 13a affecté à la survitesse, correspond à une tension supérieure à V référence. Toutefois, il est clair que si le dispositif de régulation était agencé de manière que V référence diminue alors que la vitesse augmente, le sens du décalage du seuil serait inversé ; il y aurait également des inversions au sujet des états « hauts » et des états « bas » évoqués précédemment pour les différentes portes et bascules.

Le seuil S2 du comparateur 13b est décalé de la même valeur absolue e, mais en sens contraire, par rapport à la limite prédéterminée V référence. Le seuil S2 (figure 2) est donc inférieur à V référence.

Le décalage des seuils S1 et S2 est obtenu en branchant, entre une borne appropriée des comparateurs 13a, 13b, et la masse, respectivement la résistance r12 et la résistance r13. Ces résistances peuvent être réglables de manière à permettre l'ajustement des seuils S1 et S2.

La valeur absolue e du décalage des seuils par rapport à la limite prédéterminée est avantageusement constante quelle que soit la vitesse de l'élément 1.

Le convertisseur fréquence-tension 6 est agencé de manière à fournir sur sa sortie 8, une composante alternative a (figure 2) d'amplitude h. La différence S1-S2 entre les deux seuils des comparateurs 13a, 13b est ajustée de manière à être égale ou sensiblement égale à cette amplitude h.

On peut donc écrire :

$$h = 2e.$$

La valeur e étant de préférence constante, le convertisseur 6 est agencé de telle sorte que l'amplitude h de la composante alternative e reste constante quelle que soit la vitesse de l'élément 1.

L'amplitude e du décalage de chaque seuil correspond, sensiblement, à 5 % de la vitesse maximale possible pour l'élément 1.

Dans le cas d'un véhicule automobile, l'amplitude du décalage e correspond, par exemple, à une vitesse de l'ordre de 5 km/heure, de telle sorte que S1-S2 correspond à environ 10 km/heure.

Chaque comparateur 13a, 13b pilote les moyens d'entraînement, formés par un moteur électrique 19, dans un sens donné, suivant le signe de l'erreur ; pour la sur-vitesse, rotation du moteur 19 commandée dans un sens par le signal de sortie du comparateur 13a ; pour la sous-vitesse, rotation du moteur 19 dans l'autre sens commandée par le signal de sortie du comparateur 13b.

La commande du moteur 19 est assurée par l'intermédiaire de deux transistors Tr2, Tr3, npn, notamment des transistors « Darlington ». La base du transistor Tr2 est reliée, par l'intermédiaire d'une diode Zener 20, à la sortie du comparateur 13a ; la base du transistor Tr3 est reliée par la diode Zener 21 à la sortie du comparateur 13b.

Les émetteurs des deux transistors Tr2, Tr3 sont reliés à la masse.

Les collecteurs de ces deux transistors sont reliés, respectivement, à une borne 22, 23, d'un contact fin de course FC1 et FC2, inverseur. Le moteur 19 est branché entre les bornes 24, 25 de pivotement du contact, l'autre borne 26, 27, de chaque contact est reliée au pôle +.

La borne 24 de pivotement est reliée au collecteur d'un transistor pnp Tr4 et à l'anode d'une diode 28. L'émetteur du transistor Tr4 et la cathode de la diode 28 sont reliés au pôle +.

La borne de pivotement 25 est reliée, de la même manière, par un transistor Tr5 et une diode 29 au pôle +. La base du transistor Tr4 est reliée par une résistance 30 au collecteur du transistor Tr5. La base du transistor Tr5 est reliée par une résistance 31 au collecteur du transistor Tr4.

Le moteur électrique 19 est propre à agir sur l'organe de réglage g de l'allure du moteur. Les contacts fin de course FC1 et FC2 sont commandés par un élément (non montré) dont la position est liée, lorsque la régulation fonctionne, à la position de l'organe g.

On voit que le basculement de l'un ou de l'autre des contacts FC1, FC2, en fin de course dudit élément, provoque le branchement du moteur 19 en court-circuit sur le pôle +, soit par la liaison 24, 26 et la diode 29, soit par la liaison 25, 27 et la diode 28.

Ce branchement en court-circuit, permet de dissiper très rapidement l'énergie accumulée dans le moteur et d'obtenir un arrêt pratiquement instantané de ce moteur d'où une position précise.

Comme visible sur les figures 2 à 4, le convertisseur 6 est agencé pour fournir une composante alternative *a* en forme de dents de scie présentant une partie descendante a1 incurvée, tournant sa concavité vers les tensions positives. Cette partie incurvée a1 permet de commander, comme expliqué plus loin, le moteur électrique 19 plus ou moins énergiquement selon le signe de l'erreur. En effet, pour déplacer l'organe *g* dans le sens commandant une allure plus élevée du moteur il faut, généralement, vaincre un effort résistant de rappel, alors que dans le sens contraire, cet effort de rappel vient aider le moteur 19.

L'autre partie a2 de la dent de scie est formée par un segment sensiblement parallèle à l'axe des tensions comme visible sur les figures 2 à 4.

La forme souhaitée de la partie incurvée a1 est obtenue en jouant sur les valeurs des condensateurs c1, c2 et c3 du convertisseur 6.

Par exemple, on choisit c2 = c3 = 20 c1 (vingt fois c1).

La régulation de la vitesse de l'élément 1 autour de la valeur de consigne correspondant à la tension V référence a lieu de la manière suivante.

Lorsque la vitesse réelle de l'élément 1 est égale à la consigne correspondant à V référence, la composante moyenne continue Em de la tension à la sortie du convertisseur A est égale à la valeur moyenne S1 + S2/2 (voir figure 2).

La composante alternative *a* est alors comprise entre les seuils S1 et S2, les sommets supérieurs et inférieurs de cette composante *a* étant situés sur ces seuils, comme visible sur la figure 2.

Aucun des seuils S1, S2 n'étant franchi, aucun signal ne sera présent à la sortie du comparateur 13a ou 13b. Les transistors Tr2 et Tr3 resteront bloqués et le moteur 19 ne sera pas alimenté. L'équilibre se maintiendra s'il n'y a pas de variation dans les conditions de déplacement de l'élément 1.

Si la vitesse de cet élément 1 devient supérieure à la limite prédéterminée, la composante moyenne de tension continue à la sortie du convertisseur 6 devient supérieure à la tension V référence (voir figure 3). La composante alternative *a* est donc décalée vers le haut, par rapport à la valeur moyenne des seuils ; la composante alternative *a* va couper le seuil supérieur S1, comme visible sur cette figure 3.

Pendant toutes les périodes où la composante alternative *a* est supérieure au seuil S1, un signal de commande 32 (figure 3) formé par des créneaux positifs apparaît à la sortie du comparateur 13a. Pendant toute la durée de chaque créneau positif, le transistor Tr2 est rendu conducteur de telle sorte que le moteur 19 tourne dans le sens propre à déplacer l'organe *g* de manière à réduire la vitesse de l'élément 1.

La tension moyenne d'alimentation du moteur 19 sera proportionnelle aux aires hachurées des créneaux 32.

On voit ainsi, que cette tension d'alimentation du moteur 19 dépendra de l'amplitude de l'erreur de vitesse puisque la largeur de chaque créneau 32 dépend de l'amplitude du dépassement du seuil S1 par la composante alternative *a*.

La tension moyenne d'alimentation du moteur est en fait égale au produit de la tension maximum d'alimentation de ce moteur par le rapport cyclique des signaux de commande 32.

Dans le cas d'une sous-vitesse, la composante alternative *a* va couper le seuil inférieur S2.

Pendant tout le temps où cette composante *a* sera inférieure à ce seuil S2, on obtiendra à la sortie du comparateur 13b des signaux de commande 33 correspondant à des créneaux de tension positive. Le transistor Tr3 sera rendu conducteur par ces créneaux et le moteur 19 tournera en sens inverse de celui envisagé précédemment, en vue d'assurer une augmentation de la vitesse de l'élément 1.

Il est à noter que les diodes Zener 20, 21, permettent un blocage des transistors Tr2, Tr3.

En comparant les figures 3 et 4, on voit que, pour un même écart absolu de la vitesse réelle par rapport à la consigne prédéterminée, le rapport cyclique (rapport de la durée d'un signal à la durée d'une période) des signaux 33 sera supérieur à celui des signaux 32, du fait de la courbure de la partie a1 de la dent de scie.

Il en résultera une tension moyenne de commande du moteur plus forte dans le cas d'une sous-vitesse (figure 4), pour une même erreur de vitesse absolue.

On obtient ainsi une commande plus énergique de l'organe *g* dans le sens qui nécessite de vaincre un effort de rappel.

La figure 5 illustre cette différence de la commande suivant que l'on est en sur-vitesse ou en sous-vitesse.

Sur cette figure 5, on a porté, en abscisses, l'erreur de vitesse de l'élément 1, par rapport à la consigne prédéterminée qui correspond à l'origine des abscisses. En ordonnées, on a porté la tension moyenne d'alimentation du moteur 19.

Cette tension d'alimentation moyenne est égale à la pleine tension lorsque l'erreur de vitesse est telle que la composante alternative *a* se situe entièrement au-dessus du seuil S1 (sur-vitesse) ou entièrement au-dessous du seuil S2 (sous-vitesse) ; dans le cas d'un véhicule automobile, cette erreur de vitesse peut être fixée à 5 km/heure comme déjà indiqué.

On voit, d'après la figure 5, que l'augmentation de la valeur absolue de la tension de commande, en fonction de l'erreur de vitesse, est plus lente dans la région 34 correspondant à une sur-vitesse que dans la région 35 correspondant à une sous-vitesse.

Ainsi, selon l'invention, on utilise directement la résiduelle en dents de scie de la conversion fréquence-tension, pour la commande proportionnelle. Il en résulte, notamment l'avantage de ne pas avoir à lisser par intégration la tension vitesse, ce qui donne une meilleure réponse, sachant que l'on déforme la dent de scie pour l'obtention d'un gain différent.

## Revendications

1. Dispositif de régulation de la vitesse d'un élément (1) entraîné par un moteur (2), comprenant :

— un capteur (3) de la vitesse dudit élément (1) propre à fournir des signaux dont la fréquence dépend de la vitesse de cet élément ;

— un convertisseur fréquence-tension (6), propre à faire correspondre à la fréquence des signaux, fournis par le capteur, une tension dépendant de ladite fréquence et comprenant une composante moyenne continue et une composante alternative (a) ;

— des moyens de comparaison (13) de cette tension avec une tension de référence correspondant à une consigne de vitesse prédéterminée, ces moyens de comparaison étant propres à fournir, à leur sortie, un signal dépendant du résultat de la comparaison ;

— et des moyens d'entraînement (19), sensibles au signal de sortie des moyens de comparaison (13), propres à agir sur un organe (g) de réglage de l'allure du moteur de manière à modifier cette allure dans le sens qui tend à ramener la vitesse de l'élément à la valeur souhaitée, caractérisé par le fait que le convertisseur fréquence-tension (16) est agencé pour fournir une tension dont la composante alternative (a) a la forme d'une dent de scie qui présente une partie incurvée (a1), et que, d'une manière connue elle-même, les moyens de comparaison comprennent deux comparateurs (13a, 13b) associés respectivement à une sur-vitesse et à une sous-vitesse de l'élément, les seuils de basculement (S1, S2) de ces comparateurs étant décalés de part et d'autre de la tension correspondant à la consigne prédéterminée de la même ou sensiblement la même valeur absolue (e), la différence entre les deux seuils étant sensiblement égale à l'amplitude de la composante alternative résiduelle, l'ensemble étant tel qu'on obtienne une commande de l'organe de réglage du moteur plus énergique dans un sens que dans l'autre.

2. Dispositif de régulation selon la revendication 1, pour véhicule automobile dont l'organe de réglage (g) de l'allure du moteur est rappelé, par des moyens élastiques, dans la position de fermeture correspondant à la plus petite vitesse du moteur, caractérisé par le fait que la partie incurvée (a1) de la dent de scie de la composante alternative (a) est formée par la partie descendante de cette dent de scie, cette partie incurvée tournant sa concavité dans un sens tel que la commande de l'organe de réglage (g) soit plus énergique en cas de sous-vitesse, c'est-à-dire dans le sens qui vise à rétablir une vitesse plus élevée.

3. Dispositif de régulation selon l'une quelconque des revendications précédentes, caractérisé par le fait que le convertisseur fréquence-tension (6) est réalisé autour d'un amplificateur opérationnel (A1), dont l'entrée non inverseuse (7) est reliée à la masse par une résistance (r2) et un condensateur (C1) disposés en parallèle, et dont la sortie est reliée, à l'entrée inverseuse, par deux résistances (r3, r4) branchées en série, et par deux condensateurs (C2, C3), de capacité égale, branchés respectivement en parallèle aux bornes des résistances.

4. Dispositif selon la revendication 3, caractérisé par le fait que les deux condensateurs (C2, C3), de capacité égale, reliant la sortie de l'amplificateur (A1) à son entrée inverseuse (9), ont une capacité dont la valeur est sensiblement vingt fois supérieure à la capacité du condensateur (C1) branché entre la masse et l'entrée non inverseuse (7) de l'amplificateur opérationnel.

5. Dispositif de régulation selon l'une quelconque des revendications précédentes, caractérisé par le fait que l'amplitude du décalage des seuils (S1, S2) des comparateurs est constante quelle que soit la vitesse de l'élément (1).

6. Dispositif de régulation selon l'une quelconque des revendications précédentes, caractérisé par le fait que la composante moyenne de la tension à la sortie du convertisseur fréquence-tension (6) est égale à la somme d'une tension proportionnelle à la vitesse de l'élément et d'une tension proportionnelle à l'accélération dudit élément, la sortie du convertisseur étant reliée à la masse par une résistance (r5) et un condensateur (C4) formant un circuit d'intégration dont le point milieu (E) est relié, par l'intermédiaire d'un contact (R), à un condensateur mémoire (M) relié à une entrée (12) des moyens de comparaison (13).

7. Dispositif de régulation selon la revendication 6, caractérisé par le fait que le condensateur mémoire (M) est relié à l'entrée (12) des moyens de comparaison (13) par l'intermédiaire d'un amplificateur opérationnel (A2), à grande impédance d'entrée, monté en suiveur de tension.

8. Dispositif de régulation selon la revendication 7, caractérisé par le fait que l'amplificateur opérationnel (A2) monté en suiveur de tension est relié à l'entrée (12) des moyens de comparaison (13) par une diode (11) appartenant à un pont (D) de diodes dont les cathodes, branchées en commun, sont reliées à ladite entrée (12) des moyens de comparaison, l'anode (16) d'une autre diode (17) de ce pont étant reliée à la sortie d'une bascule (B) du type RS, les deux entrées (14, 15) de cette bascule étant reliées respectivement à deux contacts dont l'un (I1) commande la mise en mémoire d'une vitesse et dont l'autre (I2) commande une consigne de vitesse supérieure à la vitesse maximale possible pour le véhicule, une troisième diode (18) du pont pouvant notamment être reliée par son anode à un contact (K) en particulier actionné par l'enfoncement d'une pédale d'accélérateur, propre à commander également une telle consigne de vitesse supérieure à la vitesse maximale.

9. Dispositif de régulation, selon la revendication 8, caractérisé par le fait qu'une temporisation est prévue sur chaque entrée (14, 15) de la bascule (B), la constante de temps de la temporisation sur l'entrée (15) reliée au contact (I2) commandant l'annulation de la régulation étant supérieure à la constante de temps de temporisation sur l'autre entrée (14).

10. Dispositif de régulation selon l'une quelconque des revendications précédentes, dans lequel les moyens d'entraînement comprennent un moteur électrique (19), caractérisé par le fait que le circuit de commande de ce moteur électrique (19) comprend des contacts fin de course inverseurs (FC1, FC2) propres à couper l'alimentation du moteur électrique en fin de course de l'organe de réglage, et agencés de telle sorte qu'ils assurent, lorsqu'ils sont actionnés, le branchement des deux bornes du moteur électrique (19) à un même pôle, notamment positif, de manière à provoquer un arrêt pratiquement instantané de ce moteur.

## Claims

1. Means for controlling the speed of an element (1) driven by a motor (2) and comprising :
— a sensor (3) of the speed of the element (1), the sensor being adapted to output signals whose frequency depends upon the speed of the element (1) ;
— a frequency-voltage converter (6) adapted to match to the frequency of the signals from the sensor (3) a voltage which depends upon such frequency and which comprises a mean d.c. component and an alternating component (a) ;
— means (13) for comparing such voltage with a reference voltage corresponding to a predetermined speed set value, the comparison means being adapted to output a signal dependent upon the comparison result, and
— driving means (19) which respond to the output signal of the comparison means (13) and which are adapted to act on an element (g) for adjusting the speed of the motor in a sense tending to restore the speed of the element to the required value, characterised in that the frequency-voltage converter (16) is adapted to output a voltage whose a.c. component (a) has the shape of a saw tooth having a curved portion (a1) ; in manner known *per se* the comparison means comprise two comparators (13a, 13b) associated with overshoot and undershoot respectively of the speed of the element (1), the flipflop thresholds (S1, S2) of the comparators being offset on either side of the voltage corresponding to the predetermined set value of the same or substantially the same absolute value (e), the difference between the two thresholds being substantially equal to the amplitude of the residual a.c. component ; the whole being such that the motor-controlling element is actuated more vigorously in one direction than in the other.

2. Means according to claim 1 for a motor vehicle whose engine speed control element (g) is returned by resilient means to the closed position corresponding to the lowest engine speed, characterised in that the curved part (a1) of the saw tooth of the a.c. component (a) is formed by the descending part of the saw tooth, the curved part having its concavity facing in a direction such that actuation of the control element (g) is more vigorous in the case of a speed undershoot — i.e., in the sense of restoring a higher speed.

3. Means according to either of the previous claims, characterised in that the frequency-voltage converter (6) is devised around an operational amplifier (A1) whose non-inverting input (7) is earthed by way of a parallel circuit arrangement comprising a resistance (r2) and a capacitor (C1), the output of the operational amplifier being connected to the inverting input by way of two serially connected resistances (r3, r4) and of two capacitors (C2, C3) each of the same capacitance and connected one each in parallel across the resistances.

4. Means according to claim 3, characterised in that the two capacitors (C2, C3) have a capacitance substantially twenty times the capacitance of the capacitor (C1) connecting the non-inverting input (7) of the operational amplifier to earth.

5. Means according to any of the previous claims, characterised in that the amplitude of the offset of the thresholds (S1, S2) of the comparators is constant at all speeds of the element (1).

6. Means according to any of the previous claims, characterised in that the mean component of the voltage at the output of the frequency-voltage converter (6) is equal to the sum of a voltage proportional to the speed of the element (1) and of a voltage proportional to the acceleration thereof, the converter output being earthed by way of a resistance (r5) and of a capacitor (C4) forming an integrating circuit whose centre point (E) is connected by way of a contact (R) to a memory capacitor (M) connected to an input (12) of the comparison means (13).

7. Means according to claim 6, characterised in that the memory capacitor (M) is connected to the input (12) of the comparison means (13) by way of a high-input-impedance operations amplifier (A2) connected as a voltage follower.

8. Means according to claim 7, characterised in that the operational amplifier (A2) is connected to the input (12) of the comparison means (13) by a diode (11) forming part of a bridge (D) of diodes whose commoned cathodes are connected to the last-mentioned input (12) of the comparison means (13), the anode (16) of another diode (17) of the bridge (D) being connected to the output of an RS type flipflop (B), whose two inputs (14, 15) are connected to two contacts (I1, I2 respectively), the contact (I1) causing storage of a speed while the contact (I2) actuates a speed set value higher than the vehicle's maximum possible speed, while a third diode (18) of the bridge can *inter alia* be connected by way of its anode to a contact (K), actuated more particularly by depression of an accelerator pedal, also adapted to control a speed set value higher than the maximum speed.

9. Means according to claim 8, characterised in that a delay is provided at each input (14, 15) of the flipflop (B), the time constant of the delay at the input (15) connected to the contact (I2) controlling cancellation of the control being greater than the delay time constant at the other input (14).

10. Means according to any of the previous claims, wherein the driving means comprise an electric motor (19), characterised in that the control circuit of the electric motor (19) comprises reversing limit contacts (FC1, FC2) adapted to deenergize the electric motor (19) at the end of the travel of the control element and so devised as to connect when actuated the two terminals of the motor (19) to a single pole, noteably the positive pole, so as to produce a substantially immediate stop of the motor (19).


**Ansprüche**

1. Vorrichtung zur Geschwindigkeitsregelung eines von einem Motor (2) angetriebenen Elements (1)

— mit einem Detektor (3) zur Aufnahme der Geschwindigkeit des genannten Elements (1) und zur Erzeugung von Signalen, deren Frequenz von der Geschwindigkeit des Elements abhängt ;

— mit einem Frequenz-Spannungs-Wandler (6) zur Erzeugung einer der Frequenz der von dem Detektor (3) gelieferten Signale entsprechenden Spannung, die von der genannten Frequenz abhängt und eine Gleich- sowie eine Wechselkomponente (a) enthält ;

— mit Vergleichermitteln (13) zum Vergleich dieser Spannung mit einer Referenzspannung, welche einer bestimmten Geschwindigkeitsvorgabe entspricht, und zur Erzeugung eines Ausgangssignals, das von dem Ergebnis des Vergleichs abhängig ist ;

— sowie mit durch das Ausgangssignal der Vergleichermittel (13) beeinflußbaren Antriebsmitteln (19) zur Einwirkung auf ein Organ (g) zur Regelung des Motorverhaltens derart, daß dieses Verhalten mit einer Tendenz geändert wird, die die Geschwindigkeit des Elements (1) in Richtung auf den gewünschten Wert führt, dadurch gekennzeichnet, daß der Frequenz-Spannungs-Wandler (16) so ausgebildet ist, daß er eine Spannung liefert, deren Wechselkomponente (a) die Form eines Sägezahns mit einem gekrümmten Teil (A1) aufweist, und daß die Vergleichermittel (13) in an sich bekannter Weise zwei Komparatoren (13a, 13b) umfassen, die einer Über- bzw. einer Untergeschwindigkeit des Elements (1) zugeordnet sind, wobei die Kippschwellwerte (S1, S2) dieser Komparatoren gegenüber der der bestimmten Geschwindigkeitsvorgabe entsprechenden Spannung zur einen bzw. zur anderen Seite um denselben oder im wesentlichen denselben Absolutwert (e) versetzt sind und die Differenz zwischen der Kippschwellwerten im wesentlichen der Amplitude der restlichen Wechselkomponenten gleich ist,

— wobei die Anordnung so getroffen ist, dass sich eine Steuerung des Organs zur Regelung ergibt, die energischer in einer Richtung ist als in der anderen.

2. Vorrichtung nach Anspruch 1 für Kraftfahrzeuge, bei dem das Organ (g) zur Regelung des Motorverhaltens mit Hilfe elastischer Mittel in die der geringsten Motorgeschwindigkeit entsprechende Schließstellung vorgespannt ist, dadurch gekennzeichnet, daß der gekrümmte Teil (a1) des Sägezahns der Wechselkomponenten (a) von dem abfallenden Teil dieses Sägezahns gebildet ist und die Konkavität des gekrümmten Teils so gerichtet ist, daß sich im Falle von Untergeschwindigkeit, d.h. in der Richtung zur Wiederherstellung einer höheren Geschwindigkeit, eine energischere Steuerung des Regelorgans (g) ergibt.

3. Vorrichtung nach einem der vorhergehenden Ansprüche, dadurch gekennzeichnet, daß der Frequenz-Spannungs-Wandler (6) durch einen Operationsverstärker (A1) enthält, dessen nichtinvertierender Eingang (7) über einen Widerstand (r2) und einem zu diesen parallgeschalteten Kondensator (C1) mit Masse verbunden ist und dessen Ausgang über zwei in Reihe geschaltete Widerstände (r3, r4) mit dem invertierenden Eingang verbunden ist, denen zwei Kondensatoren (C2, C3) gleicher Kapazität jeweils parallelgeschaltet sind.

4. Vorrichtung nach Anspruch 3, dadurch gekennzeichnet, daß die beiden Kondensatoren (C2, C3) gleicher Kapazität, über welche der Ausgang des Operationsverstärkers (A1) mit dessen invertierendem Eingang (9) verbunden ist, eine Kapazität besitzen, deren Wert zumindest annähernd zwanzigmal größer ist als die Kapazität des Kondensators (C1), der zwischen Masse und dem nichtinvertierenden Eingang (7) des Operationsverstärkers (A1) liegt.

5. Vorrichtung nach einem der vorhergehenden Ansprüche, dadurch gekennzeichnet, daß die Amplitude der Abweichung der Kippschwellwerte (S1, S2) der Komparatoren unabhängig von der Geschwindigkeit des Elements (1) konstant ist.

6. Vorrichtung nach einem der vorhergehenden Ansprüche, dadurch gekennzeichnet, daß der Mittelwert der Spannung am Ausgang des Frequenz-Spannungs-Wandlers (6) gleich der Summe einer der Geschwindigkeit des Elements proportionalen Spannung und einer der Beschleunigung des Elements proportionalen Spannung ist, daß der Ausgang des Frequenz-Spannungs-Wandlers (6) über einen Widerstand (r5) und einen Kondensator (C4) mit Masse verbunden ist, wobei der Widerstand (r5) und der Kondensator (C4) einen Integrierkreis bilden, dessen Mittelpunkt (E) über einen Kontakt (R) mit einem Speicherkondensator (M) verbunden ist, der mit einem Eingang (12) der Vergleichermittel (13) verbunden ist.

7. Vorrichtung nach Anspruch 6, dadurch gekennzeichnet, daß der Speicherkondensator (M) über einen als Spannungsfolger geschalteten Operationsverstärker (A2) mit großer Eingangsimpedanz mit dem Eingang (12) der Vergleichermittel (13) verbunden ist.

8. Vorrichtung nach Anspruch 7, dadurch gekennzeichnet, daß der als Spannungsfolger geschaltete Operationsverstärker (A2) mit dem Eingang (12) der Vergleichermittel (13) über eine Diode (11) verbunden ist, die Bestandteile einer Diodenbrücke (D) ist, deren zusammengeschaltete Kathoden mit dem genannten Eingang (12) der Vergleichermittel (13) verbunden sind, daß die Anode (16) einer anderen diode (17) der Brücke (D) mit dem Ausgang einer RS-Kippschaltung (B) verbunden ist, daß die beiden Eingänge (14, 15) dieser Kippschalter (B) mit je einem Kontakt verbunden sind, deren einer (I1) die Speicherung einer Geschwindigkeit steuert und deren anderer (I2) eine oberhalb der Maximalgeschwindigkeit des Fahrzeugs liegende Geschwindigkeitsvorgabe steuert, und daß eine dritte Diode (18) der Brücke (D) über ihre Anode mit einem Kontakt (K) verbindbar ist, der insbesondere durch das Niedertreten eines Beschleunigungspedals betätigbar ist und der gleichermaßen für die Steuerung einer oberhalb der Maximalgeschwindigkeit liegenden Geschwindigkeitsvorgabe geeignet ist.

9. Vorrichtung nach Anspruch 8, dadurch gekennzeichnet, daß an jedem Eingang (14, 15) der Kippstufe (B) eine Zeitverzögerung vorgesehen ist, daß die Zeitkonstante der Zeitverzögerung an dem Eingang (15) der mit dem die Nullstellung der Regelung steuernden Kontakt (12) verbunden ist, größer ist als die Zeitkonstante der Verzögerung an dem anderen Eingang (14).

10. Vorrichtung nach einem der vorhergehenden Ansprüche, bei der die Antriebsmittel einen Elektromotor (19) umfassen, dadurch gekennzeichnet, daß der Steuerkreis dieses Elektromotors (19) als Umschalter ausgebildete Endschalter (FS1, FS2) zur Unterbrechung der Speisung des Elektromotors am Wegende des Regelorgans umfaßt, die derart angeordnet sind, daß sie bei ihrer Betätigung die beiden Anschlüsse des Elektromotors (19) mit einem, insbesondere dem positiven Pol verbinden und damit ein praktisch unverzügliches Anhalten des Motors verursachen.

Fig.1.

0 013 232

**Fig.2.**

**Fig.3.**

**Fig.4.**

**Fig.5.**